# EUROPEAN PATENT APPLICATION

(11) **EP 4 769 601 A1**
(43) Date of publication of application: **01.07.2026**
(21) Application number: 25851715.0
(22) Date of filing: 02.07.2025
(51) Int. Cl.: H01M 10/04, B29D 99/00, B29C 43/18, B29C 43/52

(54) **MANUFACTURING METHOD FOR SECONDARY BATTERY**

(30) Priority: 07.08.2024 KR 20240105099
(71) Applicant: LG Energy Solution, Ltd., Seoul 07335 (KR)
(72) Inventor: KIM, Jaeik, Daejeon 34122 (KR); KIM, Hyosik, Daejeon 34122 (KR); SOON, Jiyong, Daejeon 34122 (KR); KIM, Seyoung, Daejeon 34122 (KR)
(74) Representative: BCKIP Part mbB
(86) International application number: PCT/KR2025/009394
(87) International publication number: WO 2026/034807

(57) **Abstract**

The method of manufacturing a secondary battery according to the present disclosure comprises the steps of: forming a stack cell by stacking a negative electrode material layer, a current collector, a positive electrode material layer, and a separator in a first direction and sealing the side surfaces thereof with a sealing layer; pressing the stack cell in the first direction; and providing heat to the stack cell in a second direction perpendicular to the first direction to form the sealing layer, wherein the sealing layer comprises a sealing resin.

## Description

### TECHNICAL FIELD

### Cross-Reference to Related Application(s)

This application claims priority to and the benefit of Korean Patent Application no. 10-2024-0105099, filed on August 7, 2024, the disclosure of which is hereby incorporated by reference in its entirety.

The present disclosure relates to a method of manufacturing a secondary battery, and more particularly, to a method of manufacturing a secondary battery comprising a sealing layer.

### BACKGROUND

Recently, there has been a rising demand for high-capacity, high-output, and high-stability lithium secondary batteries as an application area of lithium secondary batteries has rapidly expanded to power storage supply of large-area devices, such as automobiles and power storage devices, as well as power supply of electronic devices such as electrical, electronic, communication, and computer devices.

The electrodes used in such secondary batteries may be classified into monopolar electrodes in which an active material having the same polarity is coated on both surfaces of the current collector, and bipolar electrodes in which an active material having different polarities is coated on opposite surfaces of the current collector.

Since a secondary battery using a monopolar electrode has a connection portion for connecting electrodes, the output may drop due to electrical resistance of the connection portion. In contrast, a bipolar secondary battery using a bipolar electrode stacks the electrodes without having a connection portion, and thus can minimize the connection resistance of the electrodes.

A bipolar electrode is formed by coating a positive electrode active material and a negative electrode active material on both surfaces of a current collector, with a current collector interposed therebetween. Generally, during the manufacture of a bipolar battery, a separator and a bipolar electrode are alternately stacked, and both ends of the separator and the bipolar electrode are sealed with a sealing layer. The sealing layer may be formed by coating a sealing resin, but conventionally, it was difficult to form the sealing layers to have uniform adhesive strength and thickness in the hot forming step of the sealing layer. In particular, there was a problem that the uniform forming of the sealing layer becomes more difficult as the number of stacked unit cells increases. If the sealing layer is not uniformly formed in this way, distortion or electrolyte leakage of the sealing layer may occur at a later time, and a problem may arise even in gas venting.

Therefore, there is a need to develop a method that can form a sealing layer comprising a resin so as to have uniform adhesive strength and thickness during the manufacture of a bipolar battery.

### DETAILED DESCRIPTION OF THE INVENTION

### Technical Problem

It is an object of the present disclosure to provide a method of manufacturing a bipolar battery which provides uniform heat to each sealing layer of a unit cell in the bipolar battery to form a sealing layer having uniform adhesive strength and uniform thickness, thereby having superior stability and battery characteristics.

### Technical Solution

According to an aspect of the present disclosure, there is provided a method of manufacturing a secondary battery, comprising the steps of: forming a stack cell by stacking a negative electrode material layer, a current collector, a positive electrode material layer, and a separator in a first direction and sealing the side surfaces thereof with a sealing layer; pressing the stack cell in the first direction; and providing heat to the stack cell in a second direction perpendicular to the first direction to form the sealing layer, wherein the sealing layer comprises a sealing resin.

In one embodiment, the sealing resin may comprise at least one selected from the group consisting of polyimide(PI), polyvinyl chloride(PVC), polyethylene(PE), polypropylene(PP), polyethylene terephthalate(PET), an acrylic-based resin, a phenol-based resin, a xylene resin, a styrene-based resin, an epoxy compound, a urethane-based resin, a vinyl-based resin, and a synthetic rubber.

In one embodiment, the forming the sealing layer may be compressing the thickness of the sealing layer from a first thickness to a second thickness that is smaller than the first thickness.

In one embodiment, the negative electrode material layer and the positive electrode material layer may be provided in the form of bipolar electrodes that are coated on both surfaces of the current collector, respectively.

In one embodiment, the current collector may comprise a positive electrode current collector and a negative electrode current collector, the negative electrode material layer may be coated on one surface of the negative electrode current collector, and the positive electrode material layer may be coated on one surface of the positive electrode current collector.

In one embodiment, the heat may be transferred from the outside to the inside of the sealing layer.

In one embodiment, the heat may be provided by a heat source, and the heat source may be provided in a non-contact manner to at least one side surface of the stack cell.

In one embodiment, the heat source may be provided on two side surfaces facing each other of the stack cell.

In one embodiment, in a press device comprising an upper plate, a lower plate facing the upper plate, and a column that connects the upper plate and the lower plate, the stack cell may be received in an internal space formed by the upper plate, the lower plate, and the column, and the pressing the stack cell in the first direction may be pressing the stack cell with the upper plate.

In one embodiment, the upper plate may press the entire upper surface of the stack cell on a plane.

In one embodiment, the upper plate may press a portion where the sealing layer among the upper surface of the stack cell is located on a plane.

### Advantageous Effects

A method of manufacturing a secondary battery according to the present disclosure can transmit heat energy horizontally to the sealing layers at a uniform rate during hot forming, and thus form the sealing layers so as to have uniform adhesive strength and uniform thickness. As a result, even when the secondary battery includes a plurality of unit cells in multiple layers, the sealing layer can be uniformly formed to thereby provide a secondary battery with high stability and superior battery characteristics.

### BRIEF DESCRIPTION OF THE DRAWINGS

FIG. 1 is a cross-sectional view of a unit cell according to one embodiment.
FIG. 2 is a plan view of the unit cell illustrated in FIG. 1.
FIG. 3 illustrates one step of a method of manufacturing a secondary battery.
FIG. 4 is a cross-sectional view of a bipolar electrode according to one embodiment.
FIG. 5 is a perspective view of a press device according to one embodiment illustrated in FIG. 3.
FIG. 6 is a perspective view of a press device according to another embodiment.
FIG. 7 illustrates one step of a method of manufacturing a secondary battery using the press device of FIG. 6.
FIG. 8 illustrates one step of a method of manufacturing a secondary battery.

### DETAILED DESCRIPTION OF THE EMBODIMENTS

Hereinafter, various embodiments of the present disclosure will be described in detail with reference to the accompanying drawings so that those skilled in the art can easily carry out them. The present disclosure may be modified in various different ways, and is not limited to the embodiments set forth herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

### Unit Cell

The method of manufacturing a battery cell of the present disclosure provides a battery cell comprising a unit cell.

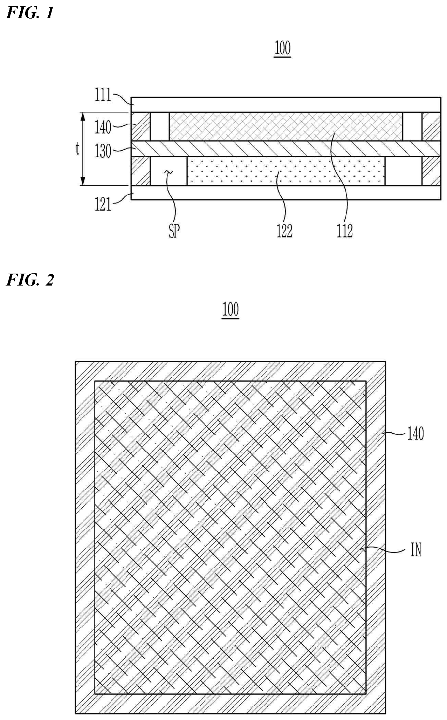

FIG. 1 is a cross-sectional view of a unit cell according to one embodiment.

Referring to FIG. 1, the unit cell 100 comprises a first current collector 111, a negative electrode material layer 112 formed on one surface of the first current collector 111, a second current collector 121, a positive electrode material layer 122 formed on one surface of the second current collector 121, a separator 130, and a sealing layer 140.

The sealing layer 140 is formed by coating a sealing resin. Specifically, the sealing layer 140 seals between the first current collector 111 and the separator 130 and between the separator 130 and the second current collector 121 to form a partition wall structure. However, embodiments of the sealing layer 140 are not limited thereto. In another embodiment, the sealing layer 140 may be formed in a form that covers the outer surfaces of the first current collector 111, the separator 130, and the second current collector 121 and wraps around the edges of the internal components.

FIG. 2 is a plan view of the unit cell illustrated in FIG. 1. FIG. 2 illustrates a plan view of a unit cell from which the first current collector 111 has been removed in order to explain the sealing layer 140. Referring to FIGS. 1 and 2 together, the sealing layer 140 may be formed on the outer surface of the unit cell 100 while having a square-ring shape. Meanwhile, the shape of the sealing layer 140 may be changed according to the shape of the unit cell 100, and is not limited to a square-ring shape, but may have a circular-ring shape, and the like.

The sealing layer 140 of the present disclosure includes a sealing resin. The sealing resin may be used without limitation as long as it is a material having excellent chemical resistance, strong adhesive strength, and thermoforming capability. For example, the sealing resin may include at least one selected from the group consisting of polyimide(PI), polyvinyl chloride(PVC), polyethylene(PE), polypropylene(PP), polyethylene terephthalate(PET), an acrylic-based resin, a phenol-based resin, a xylene resin, a styrene-based resin, an epoxy compound, a urethane-based resin, a vinyl-based resin, and a synthetic rubber.

In a subsequent process, an electrolytic solution may be filled in a space SP between the first and second current collectors 111, 121, the separator 130, and the sealing layer 140.

Each of the first current collector 111 and the second current collector 121 may be any material that has conductivity without causing a chemical change in the corresponding battery, and is not particularly limited.

For example, each of the first current collector 111 and the second current collector 121 may be made of copper, stainless steel, aluminum, nickel, titanium, baked carbon, or a material whose surface is treated with carbon, nickel, titanium, silver, or the like.

Each of the first current collector 111 and the second current collector 121 may have a thickness of 3 µm to 500 µm, and may form fine protrusions and depressions on the surface thereof to enhance the adhesive strength of the active material described later. For example, the current collector may be used in various forms such as a film, a sheet, a foil, a net, a porous body, a foam body, and a nonwoven fabric body.

Meanwhile, the unit cell 100 of one embodiment may be a bipolar unit cell. However, embodiments of the present disclosure are not limited thereto, and the unit cell 100 may also be a monopolar battery cell.

When the unit cell 100 is a bipolar unit cell, the first current collector 111 and the second current collector 121 are the same current collectors including the same material.

When the unit cell 100 is a monopolar unit cell, the first current collector 111 may be a negative electrode current collector, and more specifically, may be a Cu current collector. Here, the Cu current collector is a concept not only being made of Cu but also containing other metal materials to the extent of impurity content. The second current collector 121 may be a positive electrode current collector, and more specifically, may be an Al current collector. Here, the Al current collector is a concept not only being made of Al but also containing other metal materials to the extent of impurity content.

The negative electrode material layer 112 and the positive electrode material layer 122 may have a structure in which they are stacked so as to face each other with a separator 130 interposed therebetween.

The positive electrode material layer 122 may include a positive electrode active material, a binder, and further, a conductive material.

The positive electrode active material is a compound capable of reversible intercalation and deintercalation of lithium, and various combinations are possible. Examples thereof may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where, 0 < Z < 2), etc.), lithium-nickel-cobalt-based oxide (e.g., LiNi_{1-Y1}Co_{Y1}O₂ (where, 0<Y1<1), etc.), lithium-manganese-cobalt-based oxide (e.g., LiCo_{1-Y2}Mn_{Y2}O₂ (where, 0<Y2<1), LiMn_{2-Z1}Co_{Z1}O₄ (where, 0 < Z1 < 2), etc.), lithium-nickel-manganese-cobalt-based oxide (e.g., Li(NiₚCo_{q}Mnᵣ)O₂ (where, 0 < p < 1, 0 < q < 1, 0 < r < 1, p+q+r=1) or Li(Niₚ₁Co_{q1}Mnᵣ₁)O₄(where, 0 < p1 <2, 0< q1 <2, 0 < r1 <2, p1+q1+r1=2), etc.), or lithium-nickel-cobalt-transition metal(M) oxide (e.g., Li(Niₚ₂Co_{q2}Mnᵣ₂Mₛ₂)O₂ (where M is selected from the group consisting of Al, Fe, V, Cr, Ti, Ta, Mg and Mo, and p2, q2, r2 and s2 are atomic fractions of each independent elements, wherein 0 < p2 < 1, 0 < q2 < 1, 0 < r2 < 1, 0 < s2 < 1, p2+q2+r2+s2=1), etc.), lithium iron phosphate (e.g., Li₁₊ₐ₁Fe₁₋ₓMₓ₁(PO_{4-b1})X_{b1} (where M is at least one selected from Al, Mg and Ti, X is at least one selected from F, S and N, and -0.5≤a1≤0.5, 0≤x1≤0.5, 0≤b1≤0.1), and any one thereof or a compound of two or more thereof may be included.

Specifically, the positive electrode active material may include a lithium transition metal oxide represented by the following Formula 1, and particularly 0.5≤x≤0.7, 0≤b≤0.1, and more particularly, it may include LiNi_{0.6}Co_{0.1}Mn_{0.3}O₂.

[Formula 1] Li₁₊ₐNiₓM₁₋ₓO_{2-b}X_{b}

wherein, in Formula 1, M is at least one element selected from the group consisting of Mn, Co, Al, Fe, V, Cr, Ti, Ta, Mg, and Mo, X is at least one element selected from F, S, and N, and 0≤a≤0.5, 0.3≤x<0.8, 0≤b≤0.1.

The binder is a component that assists in the binding between the conductive material, the positive electrode active material, and the positive electrode current collector. Examples of such a binder include polyvinylidene fluoride (PVDF), polytetrafluoroethylene(PTFE), polyvinyl alcohol, carboxymethyl cellulose(CMC), starch, hydroxypropyl cellulose, regenerated cellulose, polyvinylpyrrolidone, polyethylene, polypropylene, an ethylene-propylene-diene monomer, a sulfonated ethylene-propylene-diene monomer, styrenebutadiene rubber, fluororubber, various copolymers thereof, and the like.

Typically, the binder may be included in an amount of 0.5 to 20% by weight, specifically 0.5 to 10% by weight, and more specifically 0.5 to 5% by weight based on the total weight of the positive electrode material layer 122.

The conductive material is a component for further improving the conductivity of the positive electrode active material. Such a conductive material is not particularly limited as long as it has conductivity without causing any chemical change in the corresponding battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be included in an amount of 0.1 to 20% by weight, particularly 0.5 to 10% by weight, and more particularly 0.5 to 5% by weight, based on the total weight of the positive electrode material layer 122.

In addition, other additives may further include, for example, a filler or the like as a component for inhibiting the expansion. The filler is not particularly limited as long as it can inhibit the expansion of the electrode without causing any chemical change in the corresponding battery, and examples thereof may include olefinic polymers such as polyethylene and polypropylene; fibrous materials such as glass fibers and carbon fibers, and the like.

The negative electrode material layer 112 may include a negative electrode active material, a binder, a conductive material, and other additives as described above.

The negative active material may include at least one carbon-based material selected from the group consisting of graphite, amorphous hard carbon, low-crystalline soft carbon, carbon black, acetylene black, Ketjen black, super P, graphene and fibrous carbon; Si-based materials; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; metals such as Al, Cu, Ge, Si, Sn, etc.; lithium alloys; silicon-based alloys; tin-based alloys; metal oxides such as SiO, SiO₂, SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials; titanium oxide; lithium titanium oxide, or the like, but are not limited thereto as long as they are known in the art.

The description of the binder, conductive material, and other additives in the negative electrode material layer 112 is omitted because the contents described above for the positive electrode material layer 122 can be similarly applied.

Meanwhile, the aforementioned method for fabricating the positive electrode material layer 122 and the negative electrode material layer 112 is based on general electrode manufacturing processes. For example, each of the positive electrode material layer 122 and the negative electrode material layer 112 may be fabricated by mixing the aforementioned active material, binder, conductive material, etc. in a solvent to prepare a slurry, then coating the slurry onto a current collector, followed by drying and rolling. In this case, an organic solvent or an aqueous solvent may generally be used as the solvent. For example, as the organic solvent, any one selected from the group consisting of N-methyl-2-pyrrolidone(NMP), methoxy propyl acetate, butyl acetate, glycol acid, butyl ester, butyl glycol, methyl alkyl polysiloxane, alkylbenzene, propylene glycol, xylene, monophenyl glycol, aralkyl modified methylalkyl polysiloxane, polyether modified dimethyl polysiloxane copolymer, polyacrylate solution, alkylbenzene, diisobutyl ketone, organic modified polysiloxane, butanol, isobutanol, modified polyacrylate, modified polyurethane, and polysiloxane-modified polymer, or a mixture of two or more thereof may be used. Additionally, water can be used as the aqueous solvent.

Alternatively, the positive electrode material layer 122 and the negative electrode material layer 112 may each be dry-fabricated electrode layers. For example, the aforementioned active material, binder, conductive material, and the like may be dry-mixed without a separate solvent or additive to form a free-standing film, and the free-standing film may be attached and stacked onto a current collector to form an electrode. The positive electrode material layer 122 or the negative electrode material layer 112 may be the free-standing film stacked onto a current collector. Meanwhile, in the dry fabrication process, polytetrafluoroethylene (PTFE) can be used as a binder.

The separator 130 can be used without particular limitation as long as it is typically used as a separator in a lithium secondary battery, and particularly, those having superior moisture-retention ability for an electrolytic solution as well as low resistance for ion migration of the electrolytic solution are particularly preferred.

For example, the separator 130 used herein may include a porous polymer film including a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof. Also, a typical porous nonwoven fabric, for example, a nonwoven fabric formed of high melting point glass fibers or polyethylene terephthalate fibers may be used as the separator. Alternatively, the separator may be a safety reinforced separator(SRS) in which a coating layer containing binding materials and inorganic particles is formed on one surface or both surfaces of the polymer substrate as described above. The polyolefin substrate of the SRS separator may be the separator materials described above, and the coating layer includes an inorganic particle and a binding material. Here, the inorganic particle makes it possible to form an empty space between inorganic particles, and plays a role to form a fine porosity and also serves as a spacer capable of maintaining a physical form. Further, the inorganic particle has a feature that a physical property is not changed even at a high temperature of 200°C or higher, and thus the organic-inorganic mixed layer formed comes to have a superior thermal resistance. The inorganic particles are not particularly limited, as long as they are electrochemically stable. In other words, the inorganic particles which may be used in the present disclosure are not particularly limited, unless they cause an oxidation and/or reduction reaction in a working voltage range of a battery to be applied. In particular, in case of using an inorganic particle having an ion transfer capacity, an ionic conductance in electrochemical elements may be increased to improve a performance, and thus the one having a high ion conductance is preferred. Further, if the inorganic particle has a high density, not only it is difficult to disperse such particles during manufacturing but also there is a problem of increasing a weight when manufacturing a battery. Thus, the one having a small density is preferred, if possible. In addition, an inorganic material having a high dielectric constant contributes to an increase in a degree of dissociation of electrolytic salt in electrolytic solution, e.g., lithium salt, thereby improving the ion conductivity of the electrolytic solution. Finally, inorganic particles having thermal conductivity are more preferable because they have superior heat absorbing ability and therefore inhibit the phenomenon in which heat is concentrated locally to form a heat generation point, leading to thermal runaway.

For the reasons mentioned above, the inorganic particle is preferably one or more selected from the group consisting of (a) a high-dielectric constant inorganic particle having a dielectric constant of 1 or more, 5 or more, preferably 10 or more, (b) an inorganic particle having piezoelectricity, (c) a thermally conductive inorganic particle, and (d) an inorganic particle having a lithium ion transfer capacity.

The inorganic particle having piezoelectricity means a material which is a non-conductor at atmospheric pressure, but which has an electrified property due to a change in an internal structure when a certain pressure is applied. Such inorganic particle exhibits a high dielectric characteristic, in which a dielectric constant is 100 or more. Additionally, if such inorganic particle is tensioned or compressed upon the application of a certain pressure, electric charges are generated to respectively charge one side positively and the other side negatively. Thus, such particle is a material which has a function of causing a potential difference between both side surfaces.

Examples of the inorganic particle having piezoelectricity include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), hafnia (H_{f}O₂), a mixture thereof or the like, but are not limited thereto.

The inorganic particle having the lithium ion transfer capacity refers to an inorganic particle which has a function of containing a lithium element, but not storing lithium to move a lithium ion. The inorganic particle having the lithium ion transfer capacity may transfer and move a lithium ion due to a kind of defects present inside a structure of particle. Thus, such particle may prevent a decrease in lithium mobility, thereby preventing a decrease in a battery capacity.

Examples of the inorganic particle having the lithium ion transfer capacity include: (LiAlTiP)ₓO_{y}-based glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), 14Li₂O-9Al₂O₃-38TiO₂-39P₂O₅, etc.; lithium germanium thiophosphate (LiₓGe_{y}P_{z}S_{w}, 0<x<4, 0<y<1, 0<z<1, 0<w<5) such as lithium lanthanum titanate (LiₓLa_{y}TiO₃, 0<x<2, 0<y<3), Li_{3.25}Ge_{0.25}P_{0.75}S₄, etc.; lithium nitride (LiₓN_{y}, 0<x<4, 0<y<2) such as Li₃N, etc.; SiS₂-based glass (LiₓSi_{y}S_{z}, 0<x<3, 0<y<2, 0<z<4) such as Li₃PO₄-Li₂S-SiS₂, etc.; P₂S₅-based glass (LiₓP_{y}S_{z}, 0<x<3, 0<y<3, 0<z<7) such as LiI-Li₂S-P₂S₅, etc.; a mixture thereof; or the like, but are not limited thereto.

Further, examples of the inorganic particle having a dielectric constant of 1 or more include SrTiO₃, SnO₂, CeO₂, MgO, NiO, CaO, ZnO, ZrO₂, Y₂O₃, Al₂O₃, TiO₂, SiC, a mixture thereof or the like, but are not limited thereto.

The thermally conductive inorganic particle is a material which provides low thermal resistance but no electrical conductivity and thus have insulation properties, and may be, for example, at least one selected from the group consisting of aluminum nitride(AlN), boron nitride(BN), alumina(Al₂O₃), silicon carbide(SiC), and beryllium oxide(BeO), but are not limited thereto.

In case of using the aforementioned high dielectric inorganic particle, the inorganic particle having piezoelectricity, the thermally conductive inorganic particle and the inorganic particle having the lithium ion transfer capacity together, a synergy effect thereof may be doubled.

A size of the inorganic particle is not limited, but it is preferable that the size thereof is in a range of 0.001 to 10 µm, if possible, in order to form an appropriate porosity between the inorganic particles. If such size is less than 0.001 µm, dispersibility is deteriorated and thus it becomes difficult to control a physical property. If such size is more than 10 µm, a thickness is increased to degrade the mechanical property and also the coating layer does not fulfill a role thereof due to an excessively large pore size, but increases a chance of causing an internal short circuit while charging and discharging a battery.

A content of the inorganic particle is not particularly limited, but it is preferable that such content is in a range of 1 to 99% by weight, more preferably in a range of 10 to 95% by weight per 100% by weight of a mixture of an inorganic particle and a binding material. If the content thereof is less than 1% by weight, the content of binding material becomes excessively large to decrease a pore size and a porosity due to a decrease in empty space formed between inorganic particles, and thus mobility of lithium ion may be deteriorated. In contrast, if the content thereof is more than 99% by weight, the content of binding material becomes excessively small to deteriorate a mechanical property of the coating layer due to a weakened adhesive strength between inorganic materials.

On the other hand, the binding material is not limited, unless it causes a side reaction with the electrolytic solution. In particular, the binding material may be one of which a glass transition temperature(Tg) is as low as possible, preferably in the range of -200 to 200°C. This is because such binding material may improve the mechanical properties of a final insulating film.

Further, the binding material does not need to have ion conduction capacity, but it is more preferable to use a polymer having ion conduction capacity.

Thus, it is preferable that the binding material has a high dielectric constant. Indeed, a degree of dissociation of salt in an electrolytic solution depends on the dielectric constant of an electrolytic solvent. As the dielectric constant of the polymer increases, the degree of dissociation of salt in the electrolytic solution may be improved. The dielectric constant of the polymer used may be 1 or more, particularly in a range of 1.0 to 100 (measurement frequency=1 kHz), and preferably 10 or more.

In addition to the functions described above, the binding material may have a feature of being gelled to show a high degree of swelling with an electrolytic solution, when being impregnated into the liquid electrolytic solution. Indeed, if the binding material is a polymer having a superior degree of swelling with an electrolytic solution, the electrolytic solution injected after assembling of a battery permeates the polymer, and the polymer retaining the absorbed electrolytic solution comes to have an ion conduction capacity for the electrolytic solution. Thus, if possible, a solubility index of the polymer is preferably in a range of 15 to 45 MPa^{1/2}, more preferably in a range of 15 to 25 MPa^{1/2} and 30 to 45 MPa^{1/2}. If the solubility index is less than 15 MPa^{1/2} and more than 45 MPa^{1/2}, it becomes difficult to have swelling with the liquid electrolytic solution for a conventional battery.

Examples of the binding material may be one or more selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxyl methyl cellulose, and polyvinyl alcohol.

The total thickness of the separator 130 may be 5 micrometers to 20 micrometers, particularly 5 micrometers to 15 micrometers, more particularly 6 micrometers to 13 micrometers.

The electrolytic solution may be a liquid electrolytic solution or a gel electrolytic solution.

The liquid electrolytic solution includes a lithium salt and a non-aqueous organic solvent.

The lithium salt can be used similarly as that used in lithium secondary batteries. The lithium salt is used as a medium for transferring ions within a lithium secondary battery. For example, the lithium salt may include Li⁺ as a cation, and at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻, as an anion.

Specifically, the lithium salt may include one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiFSI (lithium bis(fluorosulfonyl)imide, LiN(SO₂F)₂), LiBETI(lithium bis(perfluoroethanesulfonyl)imide, LiN(SO₂CF₂CF₃)₂) and LiTFSI (lithium bis(trifluoromethanesulfonyl)imide, LiN(SO₂CF₃)₂), or a mixture of two or more of them. However, in terms of superior stability, it is preferable to include Li(N(SO₂CF₃)₂.

Although the concentration of the lithium salt may be appropriately changed within a generally applicable range, the lithium salt may be included at a concentration of 0.5 M to 3 M, particularly at a concentration of 1 M to 2.5 M, and more particularly at a concentration of 1 M to 2 M in the electrolyte in order to obtain an optimal effect of forming a film for preventing corrosion on the electrode surface. When the concentration of the lithium salt satisfies the above range, the effect of improving the cycle characteristics during high-temperature storage of the battery is sufficient, and the viscosity of the electrolyte is appropriate, thereby capable of improving electrolyte impregnation property.

The non-aqueous organic solvent is not limited as long as it can minimize decomposition due to an oxidation reaction or the like during the charge/discharge process of the present bipolar battery, and can exhibit its desired properties together with an additive. For example, a carbonate-based organic solvent, an ether-based organic solvent, an ester-based organic solvent, and the like may be used alone or in mixture of two or more thereof, and specifically, a carbonate-based organic solvent may be used.

Among the organic solvents, the carbonate-based organic solvent may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate(PC), 1,2-butylene carbonate, 2,3-butylene carbonate, 1,2-pentylene carbonate, 2,3-pentylene carbonate, vinylene carbonate, vinylethylene carbonate and fluoroethylene carbonate(FEC). Specifically, it may include a mixed solvent of ethylene carbonate having a high dielectric constant and propylene carbonate having a relatively low melting point compared to the ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include at least one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of γ-butyrolactone, γ-valerolactone, γ-caprolactone, σ-valerolactone, and ε-caprolactone, or a mixture of two or more thereof, but are not limited thereto.

Among the ester-based solvents, since the cyclic carbonate-based compound well dissociates the lithium salt in the electrolytic solution due to high dielectric constant as a highly viscous organic solvent, the cyclic carbonate-based compound may be preferably used. When the cyclic carbonate-based compound is mixed with the low viscosity, a low dielectric constant linear carbonate-based compound such as dimethyl carbonate and diethyl carbonate and a linear ester-based compound, in an appropriate ratio, an electrolytic solution having high electrical conductivity may be prepared, which may be more preferably used.

Moreover, the electrolytic solution may further comprise a functional additive. The functional additive may be included to prevent the induction of breakage of the negative electrode in a high power environment, or to further improve low-temperature high-rate discharge characteristics, high-temperature stability, overcharge prevention, swelling improvement effect during high-temperature storage, and the like.

Specifically, representative examples of the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3% by weight to 5% by weight, and particularly 1% by weight to 5% by weight based on the total weight of the electrolytic solution. When the amount of the sultone-based compound in the electrolytic solution is more than 5% by weight, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3% by weight or less based on the total weight of the electrolytic solution.

The sulfone-based compound may include at least one compound selected from the group consisting of divinyl sulfone, dimethyl sulfone, diethyl sulfone, methylethyl sulfone, and methylvinyl sulfone, and may be included in an amount of 3% by weight or less based on the total weight of the electrolytic solution.

The sulfate-based compound may include ethylene sulfate(Esa), trimethylene sulfate(TMS), or methyl trimethylene sulfate(MTMS), and may be included in an amount of 3% by weight or less based on the total weight of the electrolytic solution.

Further, the halogen-substituted carbonate-based compound may include fluoroethylene carbonate(FEC), and may be included in an amount of 5% by weight or less based on the total weight of the electrolytic solution. When the amount of the halogen-substituted carbonate-based compound in the electrolytic solution is more than 5% by weight, cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3% by weight or less based on the total weight of the electrolytic solution. When the content of the cyclic carbonate-based compound in the electrolytic solution is more than 3% by weight, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(trifluoroethyl)phosphite, and may be included in an amount of 3% by weight or less based on the total weight of the electrolytic solution.

The borate-based compound may include lithium oxalyldifluoroborate, and may be included in an amount of 3% by weight or less based on the total weight of the electrolytic solution.

The lithium salt-based compound is a compound different from the lithium salt included in the lithium non-aqueous electrolytic solution. The lithium salt-based compound may include at least one compound selected from the group consisting of LiPO₂F₂, LiODFB, LiBOB(lithium bisoxalate borate (LiB(C₂O₄)₂) and LiBF₄, and may be included in an amount of 3% by weight or less based on the total weight of the electrolytic solution.

Two or more kinds of the functional additives may be mixed, and included in an amount of 20% by weight or less, particularly 0.1% by weight to 10% by weight, based on the total weight of the electrolytic solution. When the content of the functional additive is more than 20% by weight, there is a possibility that excessive side reactions in the electrolytic solution may occur during charge and discharge of the battery. In particular, it is not sufficiently decomposed at high temperatures, and may exist as an unreacted material or in a precipitated state in an electrolytic solution at room temperature. Thereby, side reactions may occur in which the lifetime or resistance characteristics of the battery are reduced.

The gel electrolytic solution may comprise, in addition to the lithium salt and the non-aqueous organic solvent, at least one polymerizable compound selected from the group consisting of a polymerizable monomer, oligomer, or copolymer having a polymerizable unsaturated functional group, wherein at least a part of the polymerizable unsaturated functional group may be cured.

The polymerizable compound of the polymerizable monomer, oligomer or copolymer is a material having a polymerizable unsaturated functional group, for example, a compound which has a polymerizable unsaturated functional group selected from the group consisting of a vinyl group, an epoxy group, an allyl group and a (meth)acryl group, and can be converted into a gel type through polymerization or crosslinking. The polymerizable compound is not particularly limited, as long as it is used commonly as a monomer, oligomer or polymer for preparing a gel-type electrolytic solution.

More specifically, non-limiting examples of the polymerizable monomer or oligomer include tetraethylene glycoldiacrylate, polyethylene glycol diacrylate (molecular weight 50~20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxy octane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in mixture of two or more thereof.

In addition, representative examples of the copolymer include at least one copolymer selected from the group consisting of allyl 1,1,2,2-tetrafluoroethyl ether(TFE)-(2,2,2-trifluoroethyl acrylate)polymer, TFE-vinyl acetate, TFE-(2-vinyl-1,3-dioxolane) polymer, TFE-vinyl methacrylate polymer, TFE-acrylonitrile polymer, TFE-vinyl acrylate polymer, TFE-methyl acrylate polymer, TFE-methyl methacrylate(MMA) polymer and TFE-2,2,2-trifluoroethyl acrylate(FA) polymer.

The polymer formed through the curing of the materials may be included in an amount of 0.01% by weight to 10% by weight based on the total weight of the gel-type electrolytic solution, When the content of the polymer is more than 10% by weight, the amount of the polymerizable material increases during the preparation of the gel-type electrolytic solution, so that gelation occurs too quickly or is formed too densely, resulting in a disadvantage in that a gel with high resistance is obtained. On the contrary, when the content is less than 0.01% by weight, the effect due to gelation cannot be obtained, which is not preferable.

Meanwhile, the gel-type electrolytic solution of the present disclosure may further include a polymerization initiator for polymerization of the polymerizable unsaturated functional group, and a conventional thermal polymerization initiator or photopolymerization initiator known in the art may be used. For example, the initiator may be decomposed by heat to form radicals, and react with the polymerizable monomer, oligomer, or polymer through free radical polymerization to form a gel-type electrolytic solution.

More particularly, examples of the polymerization initiator include organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azobis(2-cyanobutane), 2,2'-azobis(methylbutyronitrile), 2,2'-azobis(iso-butyronitrile) (AIBN) and 2,2'-azobisdimethyl valeronitrile (AMVN), or the like, but are not limited thereto.

The polymerization initiator is decomposed by heat including by way of non-limiting example, heat of 30°C to 100°C, or decomposed at room temperature (5°C to 30°C) to form radicals in a bipolar unit cell, and the polymerizable unsaturated functional group of a polymerizable monomer, oligomer, or polymer can react by free radical polymerization to form a gel-type electrolyte.

The polymerization initiator may be included in an amount of 0.01 to 20 parts by weight, particularly 0.01 to 1 parts by weight, based on 100 parts by weight of the polymerizable compound.

When the polymerization initiator is included within a range of 0.01 to 20 parts by weight, it is possible to increase the gel conversion rate so that gel-type electrolyte properties may be ensured, and to prevent a pre-gelation reaction so that the wettability of an electrode with an electrolyte may be improved.

### Method of manufacturing secondary battery

A method of manufacturing a secondary battery, comprising the aforementioned unit cell will be described below.

In addition, the following describes specific embodiments in which the unit cell 100 is a bipolar unit cell and the secondary battery is a bipolar battery comprising two or more bipolar unit cells 100.

The method of manufacturing a secondary battery according to the present disclosure comprises:
a step of forming a stack cell by stacking a negative electrode material layer, a current collector, a positive electrode material layer, and a separator in a first direction and sealing the side surfaces thereof with a sealing layer;
a step of pressing the stack cell in the first direction; and
a step of providing heat to the stack cell in a second direction perpendicular to the first direction to form the sealing layer,
wherein the sealing layer comprises a sealing resin.

The method of manufacturing a secondary battery according to the present disclosure comprises a step of forming a stack cell, a step of pressing the stack cell, and a step of forming a sealing layer.

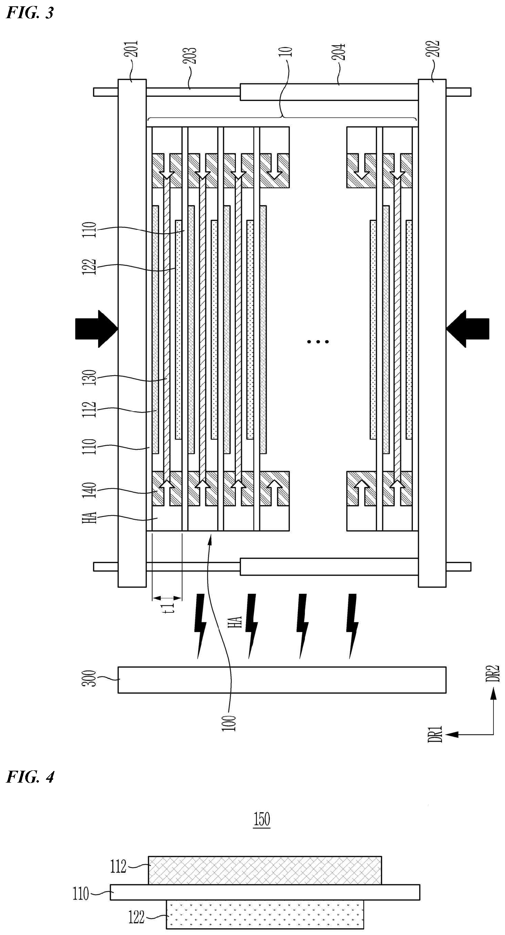

FIG. 3 illustrates one step of a method of manufacturing a secondary battery according to one embodiment.

Referring to FIG. 3, the step of forming a stack cell is a step of stacking a negative electrode material layer, a current collector, a positive electrode material layer, and a separator in a first direction and sealing their side surfaces with a sealing layer. In one embodiment, the negative electrode material layer and the positive electrode material layer may be provided in the form of a bipolar electrode coated on both side surfaces of the current collector, respectively. The bipolar electrode will be described with reference to FIG. 4.

FIG. 4 is a cross-sectional view of a bipolar electrode according to one embodiment.

Referring to FIG. 4, the bipolar electrode 150 includes a current collector 110 and a negative electrode material layer 112 and a positive electrode material layer 122 that are coated on both surfaces of the current collector 110. The current collector 110 may be a first current collector 111 or a second current collector 121 described above for the unit cell 100. When the unit cell 100 is a bipolar unit cell, the first current collector 111 and the second current collector 121 may be the same current collector comprising the same material. The description described above for the unit cell 100 also applies equally to the negative electrode material layer 112 and the positive electrode material layer 122.

Referring to FIGS. 3 and 4 together, the step of forming a stack cell is a step of alternately stacking a bipolar electrode 150 and a separator 130 and sealing their side surfaces with a sealing layer 140. The sealing layer 140 seals and attaches the current collector 110 of the bipolar electrode 150 and the separator 130 that are located adjacent to each other at both ends. In addition, the sealing layer 140 can prevent the flow and leakage of the electrolyte that will be injected later.

In the present disclosure, the sealing layer 140 is formed by coating a sealing resin. The sealing resin includes a material that can be formed by heat. As previously described for the unit cell 100 (see FIG. 1), the sealing resin may comprise at least one selected from the group consisting of polyimide(PI), polyvinyl chloride(PVC), polyethylene(PE), polypropylene(PP), polyethylene terephthalate(PET), an acrylic-based resin, a phenol-based resin, a xylene resin, a styrene-based resin, an epoxy compound, a urethane-based resin, a vinyl-based resin, and a synthetic rubber.

While repeating this process, a unit cell 100 is defined, and a stack cell 10 containing two or more unit cells 100 is formed. The stack cell 10 may include two or more unit cells 100, for example, four or more, eight or more, or sixteen or more, and includes a plurality of unit cells 100.

Inside the stack cell 10, the negative electrode material layer 112 and the positive electrode material layer 122 are connected in series. The negative electrode material layer 112 and the positive electrode material layer 122 face each other with the separator 130 interposed therebetween, and the negative electrode material layer 112 and the positive electrode material layer 122 face each other with the current collector 110 interposed therebetween.

In addition, in the bipolar electrode 150 arranged on the outermost surface of the stack cell 10, an electrode material layer is formed only on one surface of the current collector 110, and the electrode material layer is omitted on the other surface. Specifically, the negative electrode material layer 112 is omitted on the lowermost surface of the stack cell 10, and the current collector 110 is arranged on the outer side. The positive electrode material layer 122 is omitted on the uppermost surface of the stack cell 10, and the current collector 110 is arranged on the outer side.

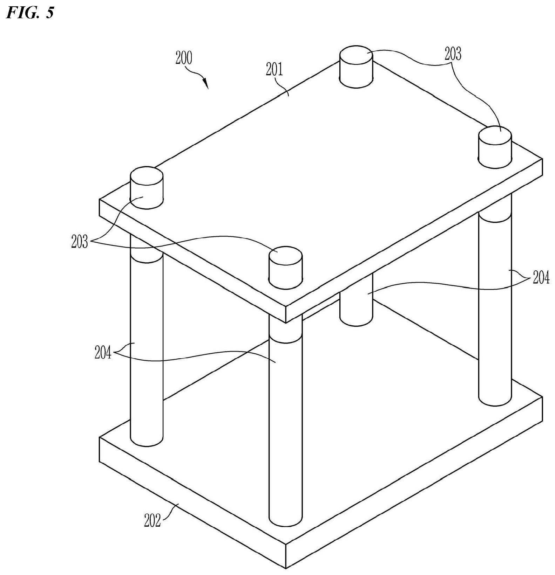

After the step of forming the stack cell as above, a step of pressing the stack cell is performed. In one embodiment, the stack cell can be pressed using a press device as illustrated in FIG. 5.

FIG. 5 is a perspective view of a press device according to one embodiment illustrated in FIG. 3.

Referring to FIG. 5, the press device 200 may include an upper plate 201, a lower plate 202 facing the upper plate 201, and a column 203 that connects the upper plate 201 and the lower plate 202.

Referring to FIGS. 3 and 5 together, the stack cell 10 is received in an internal space formed by the upper plate 201, the lower plate 202, and the column 203.

The step of pressing the stack cell is a step of pressing the stack cell 10 in a first direction DR1. Specifically, the entire upper surface of the stack cell 10 can be pressed by the upper plate 201. A uniform force may be applied to the entire interior of the stack cell 10 by the upper plate 201. Before pressing is performed, the sealing layer 140 included in the unit cell 100) has a first thickness t1, and the pressure is applied in the first direction DR1 which is the same as the thickness direction of the sealing layer 140.

Meanwhile, the press device 200 may include a gap guide 204. The gap guide 204 is provided on the column 203 to guide the height to which the upper plate 201 descends. One end of the gap guide 204 comes into contact with the lower plate 202, and the other end of the gap guide 204 is located within the column 203. The length of the gap guide 204 is set to a length to which the stack cell 10 is compressed. The upper plate 201 can press the stack cell 10 while descending to the other end of the gap guide 204.

While pressing the stack cell as above, a step of forming a sealing layer is performed.

The step of forming a sealing layer is a step of providing heat to the stack cell 10 in a second direction DR2 perpendicular to the first direction DR1 to form a sealing layer 140.

Heat HA is provided by a heat source 300, and the heat source 300 may be provided in a non-contact manner to at least one side surface of the stack cell 10. In FIG. 3, an embodiment in which the heat source 300 is provided to one surface of the stack cell 10 is illustrated, but the heat source 300 may also be provided to two side surfaces facing each other of the stack cell 10, and its position is not limited.

The heat source 300 according to one embodiment is a non-contact heating means, which may include an infrared heat source, an induction heating heat source, a laser heat source, a hot air heat source, an electromagnetic wave heat source, and the like in accordance with the heating method and principle, but is not limited thereto.

An infrared heat source is a heating means that converts electric energy into heat and transfers radiant heat to a heating object, and examples thereof include a quartz tube heater, a carbon heater, a ceramic heater, a halogen lamp, and the like, but are not limited thereto.

An induction heating source is a heating means that generates induced current through electromagnetic induction phenomena and produces heat in the heating target by means of the induced current, and examples thereof include an induction heating coil, and the like, but are not limited thereto.

A heat HA transfers heat energy to the stack cell 10 at a uniform rate, and is particularly transferred to the sealing layer 140 located at the edge of the stack cell 10. The heat HA is transferred from the outside to the inside of the sealing layer 140 and heats the sealing layer 140 to a target temperature. Since the stack cell 10 is heated in a pressed state, the sealing layer 140 heated to the target temperature can be easily rolled to the target thickness. In addition, the sealing layer 140 may have sufficient adhesive strength to the current collector 110 and the separator 130 through the heating step.

In the present disclosure, as the heat source 300 is provided to correspond to the side surface of the stack cell 10, heat HA can be uniformly transferred to the stacked sealing layers 140. Therefore, even if the stack cell 10 includes a larger number of unit cells 100 compared to the conventional one, uniform heat HA can be transferred from the sealing layer 140 located at the lowest end to the sealing layer (140) located at the highest end. That is, the temperature deviation of the sealing layers 140 according to the position is minimized, and the sealing layers 140 can be formed with a uniform thickness and uniform adhesive strength. This prevents the problems of structural distortion and leakage caused by nonuniform formation of the sealing layer that occurs in the conventional one.

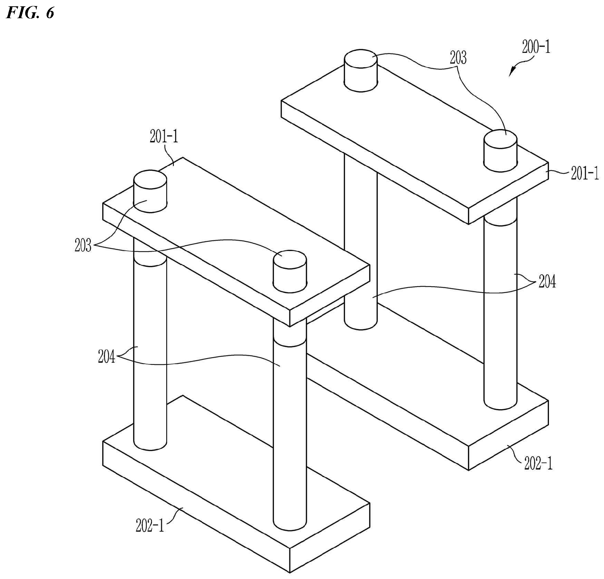

FIG. 6 is a perspective view of a press device according to another embodiment.

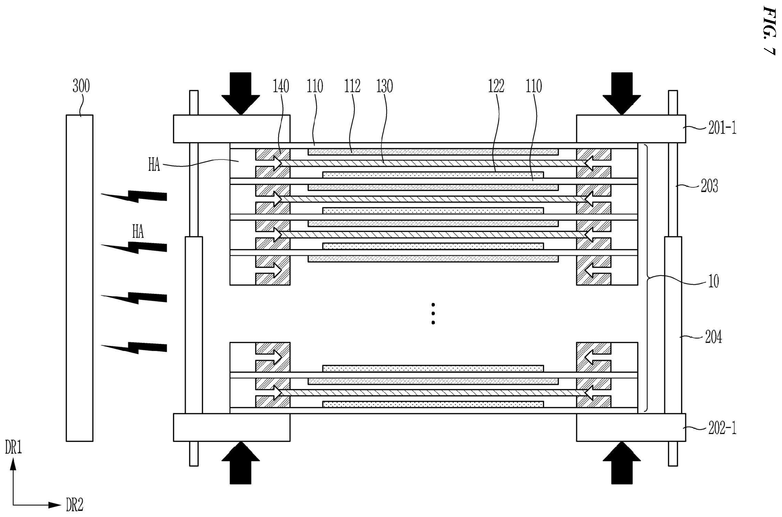

FIG. 7 illustrates one step of a method of manufacturing a secondary battery using the press device of FIG. 6.

Referring to FIGS. 6 and 7 together, the press device 200-1 according to one embodiment may have a shape in which the upper plate 201-1 and the lower plate 202-1 are separated from each other.

As an example, the upper plate 201-1 may include two rectangular plates located on the same plane and spaced apart from each other. The lower plate 202-1 may also have a shape corresponding to the upper plate 201-1. The upper plate 201-1 and the lower plate 202-1 may be located to overlap the sealing layer 140 on a plane. Furthermore, the shapes of the upper plate 201-1 and the lower plate 202-1 may be changed according to the purpose, and may have a square ring shape like the sealing layer 140 shape of FIG. 2.

Meanwhile, the description of other configurations in FIG. 7 is similarly applied to the contents described above in FIG. 4.

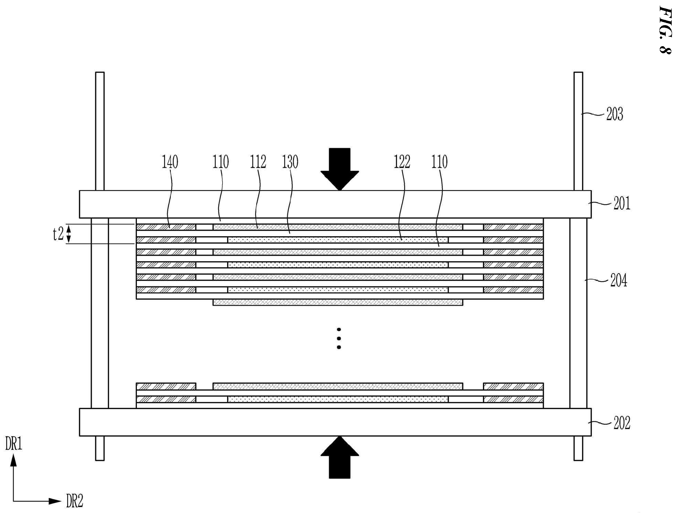

FIG. 8 illustrates one step of a method of manufacturing a secondary battery.

FIG. 8 illustrates a state in which the sealing layer forming step is completed.

Referring to FIG. 8, the upper plate 201 is lowered to a position where it contacts the gap guide 204, and the sealing layer 140 is formed to a target thickness. Specifically, the sealing layer 140 is compressed to a second thickness t2 that is smaller than the first thickness t1 which is the thickness before pressing in FIG. 3.

Furthermore, as the sealing layer 140 is compressed to the second thickness t2, the negative electrode material layer 112 and the separator 130 facing each other come into contact, and the separator 130 and the positive electrode material layer 122 facing each other come into contact. Therefore, current can flow in series from the current collector 110 located on the upper side through the bipolar electrode 150 and the separator 130 to the current collector 110 located on the other outer side.

As described above, the method for manufacturing a secondary battery of the present disclosure includes a step of forming a stack cell, a step of pressing the stack cell in a vertical direction, and a step of heating the stack cell in a horizontal direction to form a sealing layer, whereby the sealing layer included in the stack cell is uniformly formed, and each sealing layer has a uniform thickness and uniform adhesive strength, and thus a secondary battery having superior stability and battery characteristics can be provided. In addition, the method of manufacturing a secondary battery of the present disclosure applies heat to the stack cell in a horizontal direction, thereby forming a sealing layer with uniform thickness and uniform adhesive strength even when the stack cell includes a plurality of unit cells, and can provide a highly reliable method for manufacturing secondary batteries.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: unit cell
10: stack cell
110: current collector
111: first current collector
112: negative electrode material layer
121: second current collector
122: positive electrode material layer
130: separator
140: sealing layer
150: bipolar electrode

## Claims

1. A method of manufacturing a secondary battery, comprising the steps of:
forming a stack cell by stacking a negative electrode material layer, a current collector, a positive electrode material layer, and a separator in a first direction and sealing the side surfaces thereof with a sealing layer;
pressing the stack cell in the first direction; and
providing heat to the stack cell in a second direction perpendicular to the first direction to form the sealing layer,
wherein the sealing layer comprises a sealing resin.

2. The method of manufacturing a secondary battery according to claim 1, wherein:
the sealing resin comprises at least one selected from the group consisting of polyimide(PI), polyvinyl chloride(PVC), polyethylene(PE), polypropylene(PP), polyethylene terephthalate(PET), an acrylic-based resin, a phenol-based resin, a xylene resin, a styrene-based resin, an epoxy compound, a urethane-based resin, a vinyl-based resin, and a synthetic rubber.

3. The method of manufacturing a secondary battery according to claim 1, wherein:
the forming the sealing layer is compressing the thickness of the sealing layer from a first thickness to a second thickness that is smaller than the first thickness.

4. The method of manufacturing a secondary battery according to claim 1, wherein:
the negative electrode material layer and the positive electrode material layer are provided in the form of bipolar electrodes that are coated on both surfaces of the current collector, respectively.

5. The method of manufacturing a secondary battery according to claim 1, wherein:
the current collector comprises a positive electrode current collector and a negative electrode current collector,
the negative electrode material layer is coated on one surface of the negative electrode current collector, and the positive electrode material layer is coated on one surface of the positive electrode current collector.

6. The method of manufacturing a secondary battery according to claim 1, wherein:
the heat is transferred from the outside to the inside of the sealing layer.

7. The method of manufacturing a secondary battery according to claim 1, wherein:
the heat is provided by a heat source, and the heat source is provided in a non-contact manner to at least one side surface of the stack cell.

8. The method of manufacturing a secondary battery according to claim 7, wherein:
the heat source is provided on two side surfaces facing each other of the stack cell.

9. The method of manufacturing a secondary battery according to claim 1, wherein:
in a press device comprising an upper plate, a lower plate facing the upper plate, and a column that connects the upper plate and the lower plate,
the stack cell is received in an internal space formed by the upper plate, the lower plate, and the column, and
the pressing the stack cell in the first direction is pressing the stack cell with the upper plate.

10. The method of manufacturing a secondary battery according to claim 9, wherein:
the upper plate presses the entire upper surface of the stack cell on a plane.

11. The method of manufacturing a secondary battery according to claim 9, wherein:
the upper plate presses a portion where the sealing layer among the upper surface of the stack cell is located on a plane.
